# EUROPEAN PATENT APPLICATION

(11) **EP 1 886 946 A1**
(43) Date of publication of application: **13.02.2008**
(21) Application number: 06118533.6
(22) Date of filing: 07.08.2006
(51) Int. Cl.: B65G 47/244

(54) **Installation for sorting and raising bottles**

(71) Applicant: Midtjysk Flaskecentral A/S, 7470 Karup (DK)
(72) Inventor: Sørensen, Jan Bisgård, 7700 Thisted (DK); Knud Henning, Særkjær, 7470 Karup (DK)
(74) Representative: Nielsen, Leif

(57) **Abstract**

The invention relates to an installation for sorting and raising bottles, for example reusable wine bottles. The installation is of the pass-through type, i.e. of the type comprising a number of succeeding separation and sorting stations, where broken bottles, broken glass and unmarketable bottles and glass successively are removed.
The invention is peculiar in that the conveyance of the bottles after said sorting and separation stations takes place by dividing the longitudinally placed bottles on one or more conveyor belt paths provided for the purpose. The bottle ends may point forward or backwards in relation to the direction of conveying. At the discharge end of each conveyor belt path a bottle raiser is placed, which bottle raiser primarily consists of two vertical sets of belt paths. A first set (21) is composed of two parallel belt paths (23) placed opposite each other, where the mutual spacing is larger than the diameter of the bottle (F) neck, but smaller than or equal to the diameter of the bottom of the bottle. Another set (22) is composed of a single flat belt path (24), where the flat belt is crosswise to the bottle's direction of conveying in between the belts of the first set and retracted in relation to said belts in the direction of conveying. The conveying direction of the first set of belts is downwards, while the conveying direction of the other set of belts is upwards (relates to the parts of the belts pointing towards the bottle).
The sets of belts are placed such that the bottle bottoms are free to tilt downwards under the influence of the first (downwards) set of belts in those cases where the bottles move with the bottom pointing in the direction of conveying. Likewise the bottle neck may tilt upwards under the influence of the second belt set (upwards) in those cases where the bottlenecks point forward.

## Description

The present invention relates to an installation for sorting and raising bottles and particularly an installation according to the preamble of claim 1.

Prior art bottle sorting installations of the kind involved are disclosed in US 6 648 123, where the installations possess several serious defects and drawbacks. As an example the installations are vulnerable to unmarketable bottles and glass deliberately or inadvertently fed to the installation. Likewise broken bottles and glass in practise cause frequent breakdowns, if they are not efficiently removed early on in the sorting process. Furthermore, a more stable system for raising the sorted bottles is required, such that the final bottle raising may take place without frequent breakdowns known from prior art installations.

The object of the present invention is to remedy the above-mentioned defects and drawbacks of prior art bottle sorting installations. In particular it is the object to provide an improved bottle sorting installation with operationally reliable final bottle raising and in which the sorting installation at the same time completely complies with the needs to removal of unmarketable bottles and broken glass. In practice such material appears among the marketable bottles, regardless of manual collection and sorting, for instance among bottles from retailer's bottle deposits. According to the invention the object is achieved by arranging the installation as indicated in the characterising part of claim 1.

The invention is peculiar in that the conveyance of the bottles after said sorting and separation stations takes place by dividing the longitudinally placed bottles on one or more conveyor belt paths provided for the purpose. The bottle bottom may point forward or backwards in relation to the direction of conveying. At the discharge end of each conveyor belt path a bottle raiser is placed, which bottle raiser primarily consists of two vertical sets of belt paths. A first set is composed of two parallel belt paths placed opposite each other, where the mutual spacing is larger than the diameter of the bottle neck, but smaller than or equal to the diameter of the bottom of the bottle. Another set is composed of a single flat belt path, where the flat belt is crosswise to the bottle's direction of conveying in between the belts of the first set and retracted in relation to said belts in the direction of conveying. The conveying direction of the first set of belts is downwards, while the conveying direction of the other set of belts is upwards (relates to the parts of the belts pointing towards the bottle).

The sets of belts are placed in a distance from the discharge end of said conveyor belt path corresponding to a little less than half of a bottle's length, such that the bottle bottoms are free to tilt downwards under the influence of the first (downwards) set of belts in those cases where the bottles move with the bottom pointing in the direction of conveying. Likewise the bottle neck may tilt upwards under the influence of the second belt set (upwards) in those cases where the bottlenecks point forward. Thus, the bottles are not able to tilt over the edge of the conveyor belt path by themselves, which would disturb the functionality, instead they are forced up or down by the belt sets.

Preferably, said first set of belts consists of two round belts, the mutual spacing of which is adapted to the respective bottle diameter (the diameter of the bottom) to exercise a combination of a clamping and friction effect in relation to the bottom of the bottle. The other belt set is composed of a single flat belt comprising of protruding, tooth-shaped carriers. The distance between the individual carriers and the shape of these carriers are chosen in respect to achieve suitable gripping of the bottle-neck, when the conveyor presses the bottle neck towards the flat belt of the conveyor belt path. This way the bottle is forced either upwards or downwards dependent on whether the bottle moves with the neck or the bottom in the direction of conveying. In practice the arrangement has proven very reliable meaning that breakdowns caused by bottles pointing in the wrong direction are avoided.

Preferably, the flat belt is composed of a toothed belt being toothed on both sides of the belt. In this manner it is avoided, that the belt slips, if it gets wet or slippery. The external toothing on the toothed belt functions as the said carriers. The solution is simple and functional.

The bottle raiser is preferably arranged to horizontal displacement according to claim 2. By displacing the bottle raiser towards and away from the feeding conveyor timed with the inflow of bottles, such that the bottle raiser is pulled back when a bottle is raised, it is achieved that the bottle unhindered of the vertical sets of belts are led to the side standing on the bottle removing conveyor. Immediately after the bottle has left the bottle raiser, the bottle is pushed forward again, and the bottle raiser is ready to receive the next bottle on the feeding conveyor. The movements are controlled by a photocell detecting the bottles on the feeding conveyor. In practice the arrangement has proven very functional and reliable.

According to a preferred embodiment the bottle raiser is combined with an exit gate for short bottles and glass (cf. claim 3). The exit gate primarily consists of a short, open gap between two conveyor belt sections, composing the conveyor belt path, and one set of overhead clamping rollers and clamping belts forming an open space above the first-mentioned space between the two conveyor belt sections. The height of the clamping rollers above the conveyor belt path is adapted to the diameter of the roller, such that bottles and glass, irrespective of their length, are able to pass under the clamping rollers. At the same time the length of the gap is chosen so that bottles with appropriate length (marketable bottles) are able to "bridge" the open gap, under which the clamping rollers or the clamping belts prevent the bottle from tilting into the gap. It is different for short glass or short (unmarketable) bottles. Such bottle items will not be able to "bridge" the gap, before the clamping rollers or the clamping belts loses their grip on the bottle or the glass, said bottle or glass therefore tilt over the end of the conveyor belt section and into the gap. According to the invention it is preferred to place a collection conveyor belt for the removal of the sorted unmarketable bottles and glass items.

In claim 4 and 5 it is stated how a water basin advantageously can be included in the sorting installation, which water basin the bottle material passes during conveying through the installation. The water basin ensures that broken bottles and foreign bodies are separated efficiently by settling. Meanwhile entire bottles and glass are able to float and thereby pass the water basin without sinking, e.g. without being removed. It is preferred that in connection with the water basin suitable propulsion means for the floating bottles are arranged, e.g. in the shape of paddlewheels, rotating brush rollers, etc., such that intact (floating) bottles are driven through the basin at an appropriate speed. At the bottom of the water basin there is, in a well known manner, inserted a sloping conveyor for the exit of the settled material.
In the following the invention is described in connection with the drawings, where:
Fig. 1 shows a schematic side view of an installation for bottle sorting and raising according to the invention,
Fig. 2 shows the same installation, which comprises a total of 10 bottle lines seen from above,
Fig. 3 shows one of the installation's bottle raisers shown in a separate side view,
Fig. 4 is a front view of the same installation,
Fig. 5 shows the bottle raiser seen from above,
Fig. 6 shows the bottle raiser during operation during the raising of a bottle being fed with the bottom pointing forwards,
Fig. 7 is the same seen from above,
Fig. 8 shows the bottle raiser during operation and during the raising of a bottle being fed with the neck pointing forwards,
Fig. 9 is the same seen from above, and
Fig. 10 is a schematic side view of an exit gate for short bottles and glass.

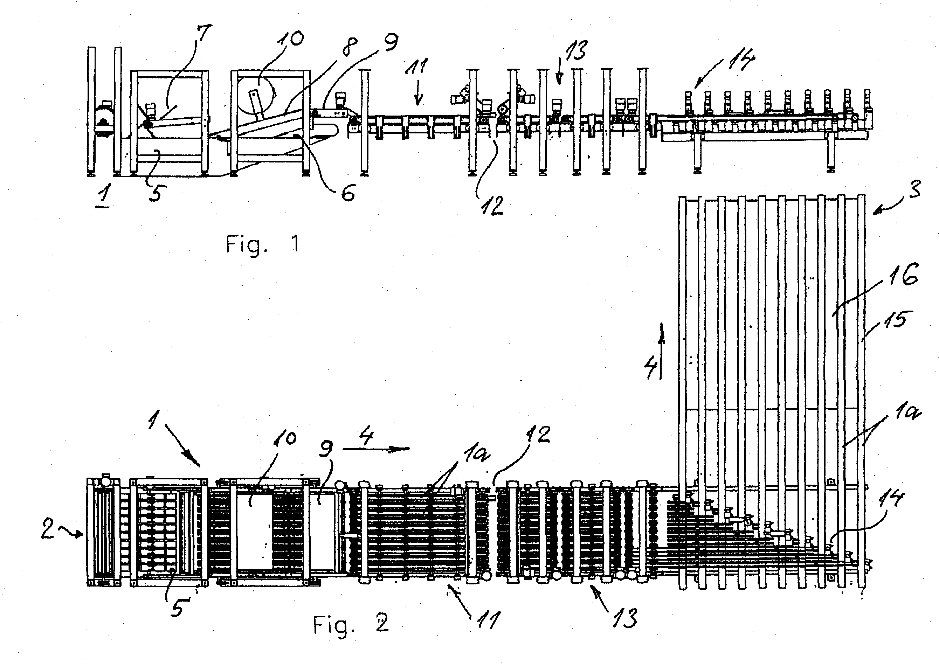

In the embodiment from fig. 1 and 2 the installation for sorting and raising bottles primarily consists of a mainly horizontal conveyor path 1 with an inlet end 2 and a discharge end 3. The conveying direction through the installation is indicated with arrows 4. On its way from the inlet end 2 to the discharge end 3 the conveying path passes a number of separation and sorting stations, where unmarketable material is removed. Finally, a bottle raising station is passed by, in which station the bottles are raised to upright position. The bottles are delivered to further processing in upright position from the discharge end 3. The different stations are described in detail in the following. It is noted that the installation in the shown embodiment consists of in total 10 separate, parallel extending bottle lines comprised of belt paths 1a placed at a short mutual distance, se fig. 2. The individual belt paths 1a either consists of traditional flat belt conveyors or round belt conveyors, where the bottles are fed, while they are placed horizontally either with the neck or the bottom pointing forwards.

The sorted (or partly sorted) bottle material is unloaded as bulk material in the installation inlet end 2, where the material dumps into a basin filled with water 5. This basin is provided with a sloping conveyor belt 6, which follows the bottom of the basin, and a paddle drum 7 is placed above the basin water surface. The object of the paddle drum 7 is to forward the intact and floating bottles through the basin and onto a collecting conveyor 8, which conveyor delivers the bottles on a distributor table 9. This table is provided with an overhead brush roller 10, which by rotation opposite the direction of conveying 4 causes equalization and distribution of the bottles on the distributor table 9.

In the basin 5 broken bottles, glass and other foreign matters (broken glass, caps, covers, etc.) are settled. These waste products are collected by the sloping conveyor belt 6 and are removed from the basin 5 by this conveyor.

From the distributor table 9 the bottles are distributed onto said ten single conveyor belts 1a, such that the bottles continue to lie longitudinally. The belt paths 1a are of the round belt type, e.g. conveyor belts each consisting of two parallel, driven round belts, between which belts the bottles are securely placed. The individual conveyor belts 1a are in principle identical, thus the following explanation only relates to a single belt path.

The individual conveyor belt 1a is composed of a single section 11 extending between the distributor table 9 and an exit gate 12, a second section 13 extends between the exit gate 12 and the bottle raiser 14 and a third final section 15. The third section consists of a flat belt conveyor functioning as discharge conveyor 16 to the raised bottles. According to fig. 2 the discharge conveyor 16 forms a right angle to the remaining sections of the belt paths. To create a distance between the bottles on the belt path sections the speed between the first and the second section is increased, i.e. the bottles are accelerated on the belt path 1a. An appropriate distance between the bottles is necessary with regard to the function in the exit gate 12 and the bottle raiser 14.

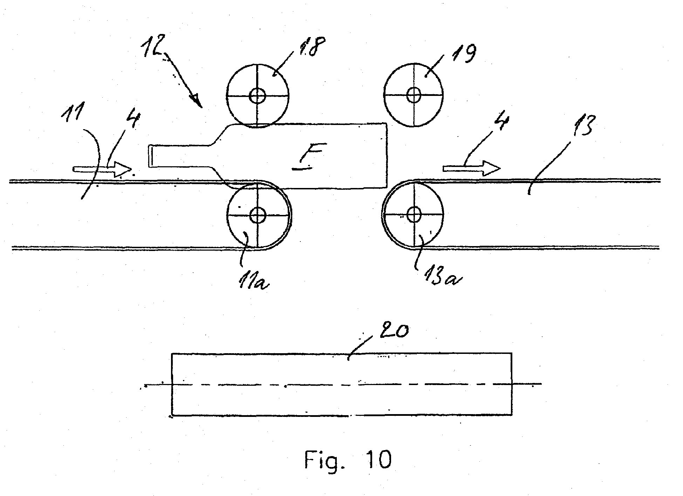

The exit gate 12 is mainly constituted of a gap 17 between the first 11 and the second 13 belt path section, see fig. 10. In appropriate height above the two belt path sections and just above the final rollers 11a and 13a two driven support rollers 18 and 19 are placed. Said rollers permit the bottles F to pass from one belt path section to another belt path section across the gap 17 without the bottles tilting down into this gap. It is, however, the assumption that the bottles have the proper length, i.e. they are marketable bottles. Bottles, which are too short in relation to the width of the gap 17, tilt into this gap and they are collected on a conveyor belt 20 placed underneath said conveyor belt, which conveys the bottles to a container (not shown). The marketable bottles F are conveyed further on the belt path section 13 towards the bottle raiser 14, see fig. 1 and 2.

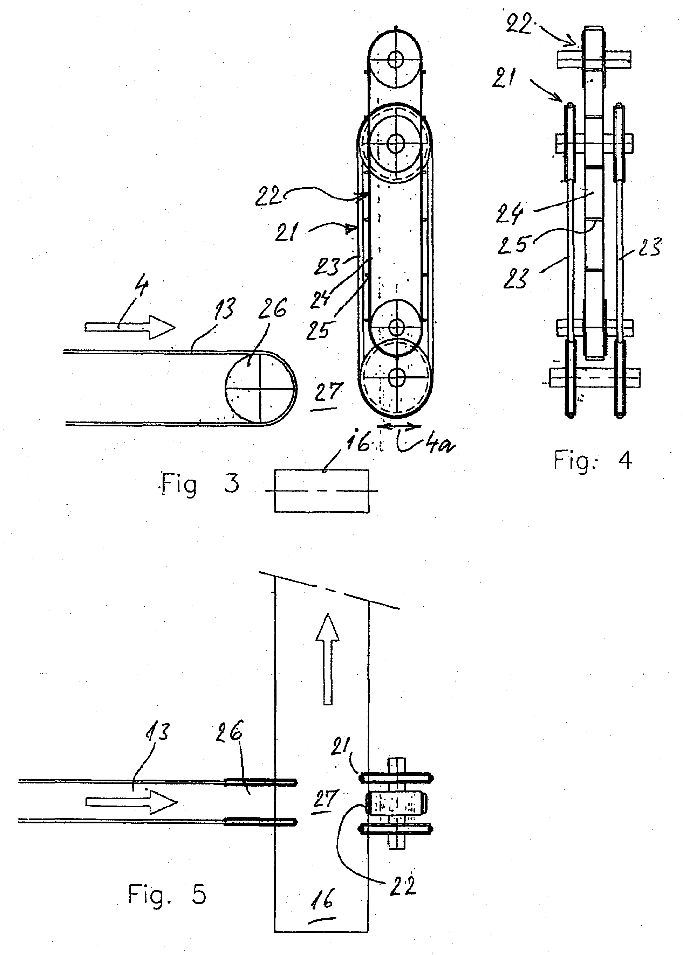

The bottle raiser 14 is shown separately in fig. 3, 4 and 5. The drawing is simplified and partly schematic. The bottle raiser mainly consists of two vertical sets of belts 21 and 22. The first set 21 is composed of two parallel extending round belts 23 with a mutual distance identical or slightly smaller than the bottom diameter of the bottle type in question (the marketable bottles). The round belts 23 are driven so that the direction of conveying of the parts of the belt pointing towards the bottle F is downwards. The other belt set 22 consists of a single flat belt or toothed belt 24, which is provided with a number of outward/forward carriers 25 pointing towards the bottles. Alternatively the belt may be a toothed belt of the type being toothed on both sides of the belt. The belt set 22 is retracted from the first set of belts 21 and the parts of the flat belt 24 pointing towards the bottles points upwards.

The two belt sets 21 and 22 are placed outside the discharge end 26 on the belt path section 13 in a short distance from this. The distance equals approximately half the length of a bottle. The gap 27 created this way between the discharge end of the belt path section 13 and the two vertical belt sets 21 and 22 makes it possible for the bottles F to tilt or fall with the bottom first onto the flat belt conveyor 16 which is placed underneath the gap 27, this flat belt conveyor is the discharge conveyor referred to in the foregoing. This conveyor conveys the bottles in upright position to the side at a right angle preventing the bottles from colliding with the two vertical belt sets 21 and 22 in the bottle raiser.

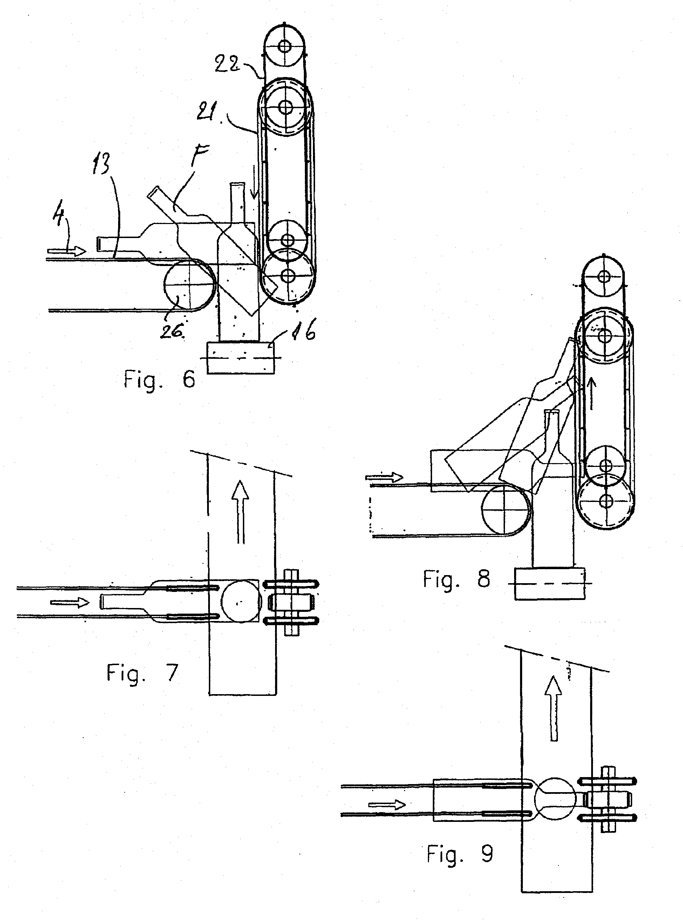

According to a particular embodiment the two belt sets 21 and 22 are mounted on a horizontal guidance (not shown), so the belt sets can be displaced towards and away from the discharge end 26. The direction of conveying is indicated with an arrow 4a in fig. 3. The movement is used to create more room for the bottle, which has just been raised (se fig. 6 and 8), making it possible for the bottle to pass to the side in relation to the bottle raiser unimpeded of the belt sets. Immediately after bottle F has left the bottle raiser, the belt sets are returned to their initial position, and the belt sets are ready to receive and raise the next bottle on the belt path section 13. The bottles are detected by photocells (not shown), and the displacement movement is activated electrically or pneumatically (air-cylinder, actuator, etc.).

The movement of the individual bottle F in the bottle raiser 14 depends on whether the bottle F is forwarded on the belt path section 13 with the bottom or the neck pointing in the direction of conveying 4. The two different patterns of movements are illustrated in figures 6-9. The sketches are clear and need not be explained in further detail.

The invention is not limited to the embodiment shown and described in the drawing. Other constructive solutions for the individual elements of the installation are conceivable within the scope of the present invention, and the application of the installation may apply within other areas than the one described.

## Claims

1. Installation for sorting and raising bottles, for example reusable wine bottles or reusable beer bottles, said installation is in particular of the pass-through type, which comprises a number of succeeding separation and sorting stations, where broken bottles, broken glass and unmarketable bottles and glass successively are removed from the marketable, intact bottles, and where the marketable bottles in the end are raised to upright position on a discharge conveyor belt for further processing by other processing equipment (cleaning of bottles, control, filling, etc.),
**characterised in that**
- the conveying of the bottles (F) after the separation and sorting stations (5, 12) takes place by dividing the longitudinally placed bottles onto one or more conveyor belt paths (1a) provided for the purpose, where the bottle's (F) neck or bottom may point forward in relation to the direction of conveying (4),
- at the discharge end of each conveyor belt path (13) a bottle raiser (14) is arranged, which mainly consists of two vertical sets of belts paths (21, 22), of which a first set (21) is composed of two parallel opposite belt paths (23), where the mutual distance is larger than the diameter of the bottle neck, but smaller than or equal to the diameter of the bottom of the bottle (F), and another set (22) is composed of a flat belt path (comprising one or more belts 24) placed with the flat belt (or the belts) crosswise of the bottle's direction of conveying (4), in between the two belts (23) of said first set and retracted in relation to said belts in relation to the conveying direction (4),
- the first set of belts (21) moves downwards, and the other belt sets (22) moves upwards, in both cases in relation to those parts of the belts pointing towards the bottle (F), and where said parts are adapted to engage said bottle.

2. Installation according to claim 1, **characterised in that** the two upright sets of belts (21, 22) are placed on a common, horizontal guidance, where said guidance by means of an actuator, for example a pneumatic cylinder, is able to move in the direction towards and away from the discharge end of the inlet conveyor belt (13), and that this movement is controlled by means of a sensor (photocell or equivalent), detecting the position of the bottle in the bottle-raiser.

3. Installation according to claim 1 or 2, **characterised in that**
- immediately before the bottle raiser (14) in connection with the conveyor belt path (13) an exit gate (12) is formed to short bottles and glass, where said exit gate mainly comprises a short, open gap (17) between two belt path sections (11, 13), where the conveying belt path 1a is comprised of a set of overhead clamping rollers (18, 19) or clamping belts, which likewise forms an open gap above the first- mentioned gap (17) between the two belt path sections, where the height above the conveying belt path (11, 13) is adapted to the diameter of the bottle, such that bottles and glass, irrespective of their length may pass underneath the clamping rollers (18, 19), and
- at the same time the width of the gap (17) is chosen so that bottles of appropriate length (marketable bottles F) are able to "bridge" the open gap, under which the clamping rollers (18, 19) or the clamping belts prevent the bottle (F) from tilting into the gap (17), while for example short glass or short (unmarketable) bottles do not in the same way "bridge" the gap, before the clamping rollers or the clamping belts lose their grip on the bottle or the glass, causing said bottle or glass to tilt over the end of the belt path section (11) and into the gap (17).

4. Installation according to claim 3, **characterised in that** in an appropriate distance beneath the exit gate (12) a collecting conveyor belt (20) is arranged to remove the sorted, non-marketable bottle- and glass items.

5. Installation according to claim 1, **characterised in that** said system comprises a water basin (5), through which the bottle material passes bulk-wise during conveying through the installation, and where broken bottles and foreign bodies of another type (for example caps, covers, etc.) are separated by settling, while intact bottles and glass are able to float and pass the basin (5) without sinking.

6. Installation according to claim 5, **characterised in that** in connection with the water basin (5) suitable propulsion-means for the floating bottles are arranged, for example comprising paddle wheels (7), rotating brush rollers (10), etc., and in the bottom of the basin (5) a sloping conveyor belt is inserted (6) to carry away the settled waste material.
